Europäisches Patentamt

(19) European Patent Office

Office européen des brevets

(11) Numéro de publication: **0 169 089**
**B1**

(12) **FASCICULE DE BREVET EUROPEEN**

(45) Date de publication du fascicule du brevet: **11.07.90**

(51) Int. Cl.⁵: **G 06 F 5/00**

(21) Numéro de dépôt: **85400952.9**

(22) Date de dépôt: **15.05.85**

(54) **Dispositif élémentaire de traitement de données.**

(30) Priorité: **21.05.84 FR 8407845**

(43) Date de publication de la demande:
**22.01.86 Bulletin 86/04**

(45) Mention de la délivrance du brevet:
**11.07.90 Bulletin 90/28**

(84) Etats contractants désignés:
**BE CH DE GB LI NL SE**

(56) Documents cités:
**GB-A-2 119 976**
**US-A-2 925 218**

(73) Titulaire: **SCHLUMBERGER INDUSTRIES**
**50, avenue Jean Jaurès**
**F-92120 Montrouge (FR)**

(72) Inventeur: **Benkara, Ferial**
**16, rue des Buttes**
**F-92220 Bagneux (FR)**
Inventeur: **Campbell, Daniel**
**3400 Palos Verdes Dr. N.**
**Palos Verdes East CA 90 274 (US)**

(74) Mandataire: **Bentz, Jean-Paul**
**SCHLUMBERGER INDUSTRIES Propriété**
**Intellectuelle Groupe Electricité B.P. 620-02**
**F-92542 Montrouge Cédex (FR)**

Courier Press, Leamington Spa, England.

## Description

La présente invention concerne un circuit de stockage de données, comprenant: un registre à décalage composé d'une pluralité de cellules disposées en série entre une entrée et une sortie principale de ce registre, et dont chacune contient, à un instant initial, un bit d'un mot initial dont le premier bit est contenu dans la cellule de sortie et le dernier bit dans la cellule d'entrée; une horloge produisant des impulsions d'horloge à une fréquence prédéterminée pour faire progresser les bits stockés dans le registre, d'une cellule à la suivante, en direction de la sortie du registre à cette fréquence prédéterminée; et des moyens de contrôle, synchronisés sur cet instant initial pour permettre, à compter du début d'une phase d'exploitation du mot initial, de disposer, en sortie du registre, d'une série de bits pertinents comprenant certains au moins des bits successifs formant ce mot initial, le début de la phase d'exploitation étant séparé de l'instant initial par un intervalle de temps correspondant à l'apparition d'un nombre prédéterminé d'impulsions d'horloge, et le premier desdits bits pertinents étant contenu dans une cellule prédéterminée audit instant initial.

Les registres à décalage sont des éléments bien connus et dont l'emploi est extrêmement fréquent et pratiquement indispensable dans les circuits de traitement de données de type série.

Il est d'usage de distinguer, dans les circuits complexes de traitement de données, une unité arithmétique et logique, des registres de données et une unité de contrôle. Schématiquement l'unité arithmétique et logique opère des combinaisons d'informations binaires, les registres affectuent des stockages temporaires d'informations, des découpages, des concaténations et/ou des décalages, et l'unité de contrôle assure l'organisation dans le temps des différentes opérations élémentaires.

Dans les logiques de type série les registres échangent, bit par bit, des informations numériques avec l'unité arithmétique et logique, sous le contrôle de l'unité de contrôle.

L'unité de contrôle comprend notamment une horloge produisant des impulsions primaires à une fréquence de base fixe, ainsi que des diviseurs de fréquence produisant des impulsions d'horloge secondaires à la fréquence de base divisée par une puissance de 2, et des circuits combinatoires à portes logiques qui délivrent, à partir des impulsions d'horloge primaires et secondaires, des signaux de contrôle plus ou moins complexes présentant entre eux des déphasages divers et auxquels sont assignées des fonctions de contrôle déterminées. Les longueurs des différents registres sont souvent égales entre elles, et par exemple égales à 8, ou tout au moins souvent représentées par une puissance de 2.

Chaque bit d'un mot binaire contenu dans un registre à décalage est représentatif d'une valeur déterminée à un instant déterminé, et cette valeur peut être modifiée à un instant suivant, en particulier par un décalage du mot dans le registre, commandé par l'unité de contrôle.

Cependant, comme d'une part il n'existe à priori aucune relation entre la longueur des registres, qui dépend de la précision ou de la puissance de calcul requise, et les amplitudes des décalages à opérer, qui dépendent de la nature des opérations numériques à effectuer, et comme par ailleurs les informations en sortie d'un registre à décalage ne sont disponibles qu'en serie, les signaux de contrôle émis par l'unité de contrôle doivent être produits de manière à tenir compte à la fois de la longueur des registres et des décalages à réaliser pour chacun des registres.

Il en résulte d'une part que l'unité de contrôle doit contenir, pratiquement pour chaque registre à décalage, un circuit combinatoire pour élaborer les signaux de contrôle propres à ce registre, et d'autre part que ce circuit combinatoire peut présenter une structure relativement complexe, en particulier lorsque l'amplitude du décalage à effectuer ne correspond pas à un nombre d'impulsions d'horloge représenté par une puissance de 2.

A titre d'exemple, le brevet US 2 925 218 décrit, en référence à sa page 5, un registre à décalage de type statique, formé de cellules dont chacune peut être adressée individuellement grâce à un circuit d'adressage propre.

Les décalages opérés par ce circuit sont optionnels mais font l'objet de calculs et de contrôles spécifiques à l'application recherchée.

Au cours d'un décalage, le contenu de chaque cellule prend la valeur "1" par défaut, sauf si la cellule précédente contenait la valeur "0", qui est alors transmise.

Enfin, les informations décalées mais non saisies à la sortie du registre de ce document antérieur sont perdues.

Dans ce contexte, le but de la présente invention est de proposer un circuit de stockage de données permettant de stocker des informations numériques et de les restituer, à l'aide de moyens de contrôle aussi simples que possible, au moment voulu, en leur ayant eventuellement applique le décalage spatial voulu.

A cette fin, le circuit de l'invention est essentiellement caractérisé en ce que le registre à décalage comprend un registre dynamique bouclé sur lui-même par une connexion de sa sortie principale sur son entrée, de manière à permettre une recirculation continue de l'information numérique qu'il contient, et en ce que les dits moyens de contrôle comprennent une sortie auxiliaire de registre sur laquelle ladite série de bits pertinents est rendue disponible, cette sortie auxiliaire étant séparée de ladite cellule prédéterminée par un nombre de cellules qui, compté en partant de cette cellule vers la sortie du registre, est égal audit nombre prédéterminé.

Parmi toutes les formes que le dispositif de l'invention peut adopter, trois formes spécifiques développent des avantages particulièrement importants.

Dans un premier mode de réalisation spécifique, le dispositif de l'invention comprend en outre un second registre à décalage dont l'entrée est reliée à une sortie auxiliaire du premier registre, et ce second registre, qui est destiné à contenir dans sa dernière cellule, à la fin de la phase d'exploitation du mot initial contenu dans le premier registre à l'instant initial, le dernier bit pertinent de ce mot initial, a une longueur égale à celle du premier registre, la fin de ladite phase d'exploitation étant ainsi repérée à partie dudit instant initial par l'écoulement d'un temps correspondant à l'apparition d'un nombre d'impulsions d'horloge égal au nombre de cellules de chacun de ces premier et second registres.

Les diviseurs de fréquence et les circuits combinatoires faisant partie de l'unité de contrôle sont ainsi grandement simplifiés dans la mesure où il est suffisant pour ces circuits de ne tenir compte que des longueurs des registres, qui sont généralement égales entre elles et représentées par une puissance de 2.

Dans un second mode de réalisation particulier, utilisable dans le cas où le début de la phase d'exploitation du mot initial est séparé de l'instant initial par un intervalle de temps correspondant à l'apparition d'un nombre d'impulsions d'horloge présentant, par rapport au multiple le plus proche du nombre de cellules de ce registre, une différence représentative d'un certain décalage temporel, le registre à décalage est un registre dynamique bouclé sur lui-même par liaison de sa sortie principale avec son entrée, de manière à permettre une recirculation permanente des informations numériques qu'il contient, et la sortie auxiliaire de ce registre est séparée de l'entrée ou de la sortie du registre par un nombre de cellules égal au nombre d'impulsions d'horloge représentant ledit décalage temporel.

Avec un tel mode de réalisation, les informations numériques voulues se trouvent disponibles au moment voulu sur la sortie auxiliaire du registre sans qu'il soit nécessaire de prévoi un quelconque circuit combinatoire propre à repérer l'instant où les informations en sortie du registre sont pertinentes, c'est-à-dire constituent les informations désirées.

Dans un troisième mode de réalisation particulier de l'invention, le dispositif comprend, outre le registre à décalage, un multiplexeur contrôlable à deux entrées au moins et une sortie, cette sortie étant susceptible d'être sélectivement raccordée, en fonction d'un signal de contrôle appliqué à ce multiplexeur, à l'une quelconque des entrées de ce dernier, ce multiplexeur étant, par ses entrées, relié à deux sorties respectives au moins du registre à décalage, dont l'une au moins est une sortie auxiliaire.

Grâce à cet arrangement, le dispositif constitue alors, entre l'entrée du registre à décalage et la sortie du multiplexeur, pour un flot d'informations numériques appliquées à l'entrée du registre à décalage, un registre tampon introduisant dans ce flot d'informations un retard programmable, déterminé par la valeur dudit signal de contrôle.

Le dispositif de l'invention est particulièrement applicable aux unités de traitement de données à usage spécifique et à programmation simple, telles par exemple que des filtres numériques programmables.

Une application plus particulière encore est celle des filtres numériques passe-bande programmables basés sur des cellules de filtrage du 2ème ordre et susceptibles d'être utilisés dans des récepteurs de télécommande centralisée.

Les trois modes de réalisation particuliers de l'invention précédemment mentionnés sont décrits ci-après, à titre indicatif et nullement limitatif, en référence aux dessins annexés, parmi lesquels:

la figure 1, formée des figures 1A à 1C, représente le contrôle de deux registres à décalage suivant la technique antérieure en vue d'un décalage spatial d'informations, et ces deux registres avant et après contrôle,

la figure 2, formée des figures 2A à 2C, représente le contrôle de deux registres à décalage suivant l'invention en vue d'un décalage spatial d'informations, et ces deux registres avant et après contrôle,

la figure 3, composée des figures 3A, 3B, 3C, représente un reigstre à décalage et son contrôle, suivant la technique antérieure, en vue de réaliser un décalage temporel d'informations,

la figure 4 représente un registre à décalage réalisant un décalage temporel d'informations selon la technique de l'invention,

la figure 5 une unité de décalage programmable reposant sur la technique de l'invention.

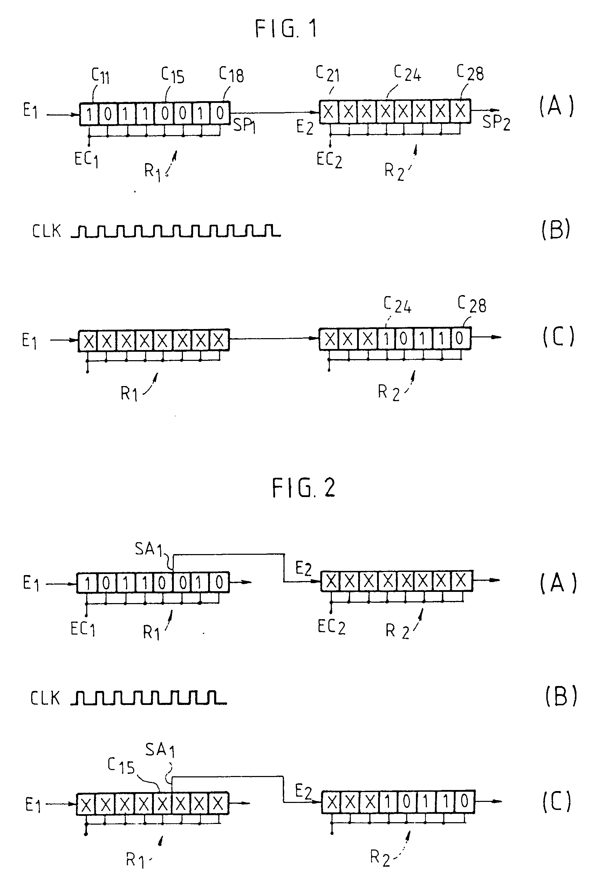

La figure 1A représente deux registres à décalage classiques R1 et R2, comportant des entrées E1, E2 et des sorties principales SP1, SP2 respectives, l'entrée E2 du second registre R2 étant raccordée à la sortie SP1 du premier registre R1.

Chaque registre est constitué par une succession de bascules, telles que C11, C15, C18, C21, C28, qui peuvent être considérées comme des cellules de mémoire élémentaires destinées à stocker un bit du mot binaire contenu, à un instant donné, dans le registre. A l'instant initial, représenté par la figure 1A, le registre R1 contient le mot binaire 10110010 et le registre R2 contient un mot binaire, pertinent ou non pour les calculs à effectuer, mais indifférent pour la présente description, et symbolisé par XXXXXXXX.

Les registres à décalage R1 et R2 sont commandés de façon bien connue par l'application, sur leurs entrées de commande respectives EC1 et EC2, d'un signal d'horloge commun CLK en provenance d'une horloge (non représentée).

A chaque impulsion du signal d'horloge, les bits des mots contenus dans les registres se transfèrent d'une cellule à l'autre en direction des sorties principales respectives SP1, SP2 de ces registres. En raison de la liaison existant entre la sortie SP1 du premier registre et l'entrée E2 du second, les bits poussés à la sortie du premier registre sont récupérés dans la première cellule C21 du second registre. Les bits reçus à l'entrée E1 du premier registre sont pertinents ou non vis-à-vis des calculs à effectuer, mais indifférents pour la présente description, et sont représentés par X. Par exemple, le premier registre R1 peut, comme cela est connu en soi, être précédé d'un multiplexeur d'extension de signe, susceptible de recopier le bit contenu à l'instant initial dans la première cellule C11.

Dans ces conditions, si les calculs exigent que les bits successifs 1, 0, 1, 1, 0 qui sont contenus à l'instant initial dans les cellules C11 à C15 du registre R1, et qui sont par exemple les seuls bits pertinents pour la suite du traitement numérique, se trouvent disponibles les uns après les autres, à compter du début d'une phase d'exploitation du mot binaire "10110010", pour être finalement placés, à la fin de cette phase d'exploitation, dans les cellules C24 à C28 du registre R2, le contrôle des registres R1 et R2 nécessitera l'application de 11 impulsions d'horloge comme le montre la figure 2B. Or la production de ces 11 impulsions d'horloge suppose des moyens relativement complexes. Si l'on appelle F la fréquence des impulsions d'horloge CLK, on devra par exemple prévoir la production d'un signal W à la fréquence F/16, d'un signal X à la fréquence F/8, d'un signal Y à la fréquence F/4, d'un signal Z à la fréquence F/2, et les 11 impulsions d'horloge seront par exemple produites par un circuit combinatoire réalisant la fonction booléenne:

CLK ET (W OU((X ET Y) OU (X ET Z))).

La figure 2 représente les moyens de l'invention, qui permettent d'aboutir au même résultat de façon beaucoup plus simple.

On retrouve sur les figures 2A et 2C les registres R1 et R2 illustrés sur la figure 2. Cependant, au lieu que l'entrée E2 du second registre soit reliée à la sortie principale SP1 du premier registre, cette entrée E2 est reliée à une sortie auxiliaire SA1 du premier registre; cette sortie auxiliaire SA1 est montée en dérivation sur le registre R1 au niveau de la cellule C15 qui contient, au début de la phase d'exploitation du mot binaire initial 10110010, le dernier bit pertinent, à savoir le dernier bit de la série 10110 qui est utilisée pour la suite des calculs. Ce dernier bit, qui est donc le premier à saisir au début de la phase d'exploitation, est ainsi transféré directement dans le registre R2 à l'apparition de la première impulsion d'horloge.

Il en résulte, comme le montre la figure 2B, que le passage de la configuration de la figure 2A à la configuration 2C peut être réalisé non plus au moyen de 11 impulsions d'horloge, mais de 8 impulsions d'horloge, autrement dit d'un nombre d'impulsions d'horloge égal au nombre de cellules de chacun des registres R1 et R2. Comme ce nombre est lui-même choisi, de façon classique, égal à une puissance de 2 (généralement égal à 8) le contrôle de ces registres est sensiblement allégé. Ainsi, en reprenant les notations introduites ci-dessus, le signal de commande de la figure 2B s'exprime par la combinaison booléenne simple: CLK ET W, et ceci quel que soit le décalage qu'on veuille réaliser, c'est-à-dire quelle que soit la position de la sortie auxiliaire SA1 sur le registre R1.

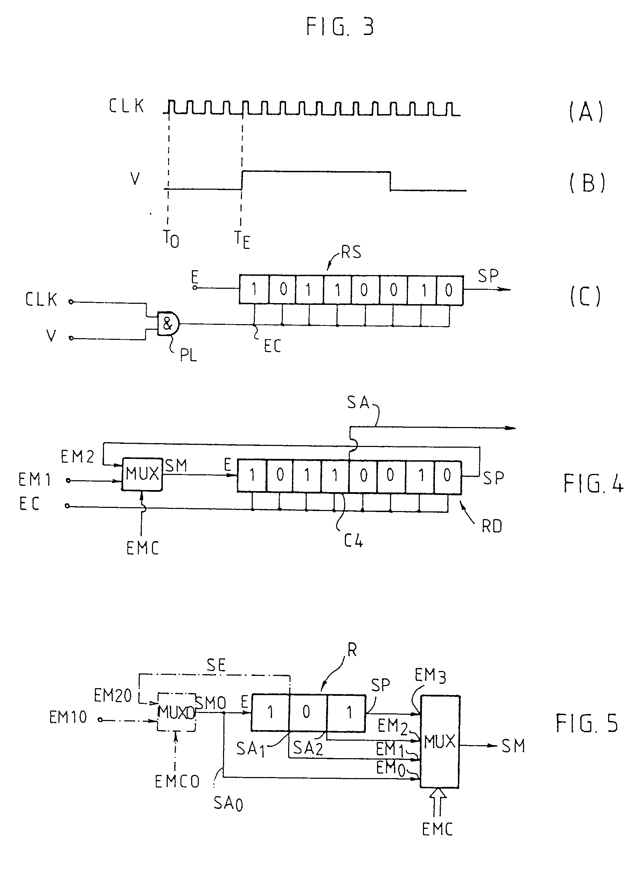

La figure 3 représente un registre à décalage statique RS contenant un mot binaire "10110010" qui, par rapport à un phénomène se produisant en un instant initial To, doit être retardé de manière à n'être rendu disponible, bit après bit, qu'à compter d'un instant TE, postérieur à To et marquant le début d'une phase d'exploitation de ce mot binaire initial "10110010".

Par registre à décalage statique, on entend un registre à décalage constitué de bascules de type D statiques. On sait en effet qu'en technologie MOS (Metal Oxide Semi-conductor) les bascules D peuvent être statiques ou dynamiques, les secondes se distinguant des premières en ce qu'elles sont réalisées avec deux fois moins de transistors mais nécessitent un rafraichissement permanent des informations qu'elles contiennent.

Selon la technique antérieure, représentée sur cette figure 3, le décalage temporel souhaité (de 4 impulsions d'horloge dans l'exemple de la figure 3) entre l'instant initial To et le début TE de la phase d'exploitation est obtenu en réalisant, par combinaison booléenne du signal d'horloge primaire CLK et de signaux d'horloge secondaires de fréquence multiple de celle de ce signal primaire, un signal de validation V présentant le décalage temporel voulu TE-To par rapport à To. Comme précédemment, l'élaboration de ce signal V peut, dans le cas général, nécessiter des moyens relativement complexes. Ce signal V, combiné au signal d'horloge CLK au moyen d'une porte logique ET, désignée par PL, est appliqué à l'entrée de commande EC du registre RS, de sorte que le mot binaire "10110010", contenu dans ce registre à l'instant initial To ne commence à se décaler qu'à partir de l'instant TE, et qu'à cet instant TE le bit disponible à la sortie du registre est bien le dernier bit du mot binaire initial.

La figure 4 représente les moyens de l'invention qui permettent d'aboutir au même résultat de façon plus simple. Le registre RD est un registre dynamique dont la sortie SP est, de façon connue, rebouclée sur l'entrée E à travers un multiplexeur MUX. Le multiplexeur MUX comporte une entrée de recyclage EM2 reliée à la sortie SP du registre RD, une entrée de données nouvelles EM1, une sortie SM reliée à l'entrée E du registre, et une entrée de commande EMC susceptible de recevoir un signal permettant, de façon sélective, de relier la sortie SM à l'entrée EM1 pour l'introduction de données nouvelles dans le registre RD, ou à l'entrée EM2 pour le recyclage de données déjà contenues dans ce registre. Le registre lui-même comprend, comme à l'ordinaire, une entrée EC de commande de cadencement de décalage recevant un signal d'horloge tel que le signal CLK de la figure 3A.

Le signal EMC est par exemple fixé, pendant tout le cycle représenté par les 16 impulsions d'horloge illustrées à la figure 3A, à une valeur telle que la sortie SM du multiplexeur est reliée à l'entree de recyclage EM2.

Dans ces conditions, la mise à disposition bit par bit du mot initial 10110010 à partir de l'instant TE est simplement réalisée en prévoyant une sortie auxiliaire SA au niveau de la cellule C4 qui, à l'instant TE, contiendra le dernier bit du mot binaire 10110010; à compter de l'instant TE, un circuit connecté à la sortie auxiliaire SA du registre RD peut donc lire bit par bit le mot "10110010" à partir du dernier bit de ce mot; si L désigne la longueur du registre (c'est-à-dire le nombre de ses cellules), la sortie auxiliaire SA du registre RD est séparée de l'entrée de ce dernier par un nombre de cellules égal à (TE-To) modulo L où (TE-To) est l'intervalle entre les instants TE et To, mesuré en nombre d'impulsions d'horloge.

La disposition aurait donc été la même que celle de la figure 4 si, au lieu d'utiliser le mot 10110010 à compter de l'instant TE, on avait voulu l'utiliser à partir d'un instant postérieur, séparé de TE par un nombre d'impulsions d'horloge égal à un multiple du nombre de cellules du registre, par exemple TE+L ou TE+2L, la même configuration de bits se retrouvant à tous ces instants, dans le registre RD aussi longtemps que ce dernier reste bouclé sur lui-même.

De plus, le décalage temporel entre TE et To aurait pu être fixé à une autre valeur que celle qui correspond à la figure 3B en disposant la sortie auxiliaire SA à un autre emplacement de la longueur du registre RD, c'est-à-dire en sortie d'une cellule autre que la cellule C4.

La figure 5 représente un dispositif conforme à l'invention, permettant de constituer, pour un flot d'informations numériques en série, un registre tampon à retard programmable.

Ce dispositif comprend un registre à décalage R comportant une entrée de données E, une sortie principale SP et des sorties auxiliaires SA0, SA1 et SA2; par souci de clarté du dessin, l'entrée de commande EC du registre R et les liaisons associées n'ont pas été représentées sur la figure 5; la sortie SA0 coïncide par exemple avec l'entrée E de ce registre R, et les sorties SA0 à SP sont reliées aux entrées EM0 à EM3 respectives d'un multiplexeur MUX comportant, outre ces quatre entrées de données EM0 à EM3, une entrée de contrôle EMC et une sortie SM.

Le multiplexeur MUX, connu en soi, permet, par application d'un signal approprié sur son entrée EMC, de relier de façon sélective la sortie SM à l'une quelconque des entrées EM0 à EM3.

Si le nombre des entrées de données du multiplexeur MUX, telles que EM0 à EM3, est supérieur à 2, l'entrée de commande EMC comprend, comme cela est connu en soi, plusieurs conducteurs de manière à permettre l'adressage de ces entrées de données au moyen d'un signal à plusieurs bits injecté en parallèle sur ces conducteurs.

Il résulte de cet arrangement qu'un flot d'informations numériques binaires parvenant aà l'entrée E du registre R peut être récupéré sur la sortie SM du multiplexeur MUX, en fonction du signal appliqué sur l'entrée EMC de ce dernier, soit en ayant emprunté le trajet SA0—EM0, c'est-à-dire sans aucun retard, soit en ayant emprunté le trajet SA1—EM1, c-est-à-dire avec un retard d'une impulsion d'horloge correspondant au stockage temporaire de chaque bit du flot d'informations dans la première cellule du registre (la cellule de gauche), soit en ayant emprunté le trajet SA2—EM2, c'est-à-dire avec un retard de 2 impulsions d'horloge correspondant au stockage temporaire de chaque bit du flot d'informations dans les deux premières cellules du registre, soit enfin en ayant emprunté le trajet SP—EM3, c'est-à-dire avec un retard de 3 impulsions d'horloge correspondant au stockage temporaire de chaque bit du flot d'informations dans chacune des cellules du registre R. Le nombre de cellules de ce registre n'est pas limité à 3, mais est choisi, comme cela apparaîtra à l'homme de l'art, en fonction des besoins à satisfaire.

Le registre à décalage R peut, comme cela est connu en soi, être précédé d'un multiplexeur MUX0 d'extension de signe dont une entrée EM10 peut recevoir des informations nouvelles, et dont une autre entrée EM20 est reliée à une sortie d'extension de signe SE prévue sur la première cellule du registre R; ce multiplexeur MUX0 d'extension de signe comprend par ailleurs une sortie SM0 reliée à l'entrée E du registre R et une entrée de commande EMC0 susceptible de recevoir un signal permettant de façon sélective de relier la sortie SM0 à l'entrée EM10 en vue de la réception d'un flot d'informations nouvelles, ou à l'entrée EM20 de façon à remplacer, à l'apparition d'une impulsion d'horloge, le bit initialement contenu dans la première cellule du registre R par un bit identique.

**Revendication**

Circuit de stockage de données, comprenant: un registre à décalage composé d'une pluralité de cellules disposées en série entre une entrée et une sortie principale de ce registre, et dont chacune contient, à un instant initial, un bit d'un mot initial dont le premier bit est contenu dans la cellule de sortie et le dernier bit dans la cellule d'entrée; une horloge produisant des impulsions d'horloge à une fréquence prédéterminée pour faire progresser les bits stockés dans le registre, d'une cellule à la suivante, en direction de la sortie du registre, à cette fréquence prédéterminée; et des moyens de contrôle, synchronisés sur cet instant initial pour permettre, à compter du début d'une phase d'exploitation du mot initial, de disposer, en sortie du registre, d'une série de bits pertinents comprenant certains au moins des bits successifs formant ce mot initial, le début de la phase d'exploitation étant séparé de l'instant initial par un intervalle de temps correspondant à l'apparition d'un nombre prédéterminé d'impulsions d'horloge, et le premier desdits bits pertinents étant contenu dans une cellule prédéterminée audit instant initial, caractérisé en ce que le registre à décalage comprend un registre dynamique bouclé sur lui-même par une connexion de sa sortie principale sur son entrée, de manière à permettre une recirculation continue de l'information numérique qu'il contient, et en ce que les dits moyens de contrôle comprennent une sortie auxiliaire de registre sur laquelle ladite série de bits pertinents est rendue disponible, cette sortie auxiliaire étant séparée de ladite cellule prédéterminée par un nombre de cellules qui, compté en partant de cette cellule vers la sortie du registre, est égal audit nombre prédéterminé.

**Patentanspruch**

Schaltung zum Speichern von Daten mit: einem Schieberegister, das aus mehreren in Reihe geschalteten Zellen zwischen einem Eingang und einem Hauptausgang dieses Registers aufgebaut ist, wovon jedes zu einem Anfangszeitpunkt ein Bit eines Anfangswortes enthält, dessen erstes Bit in der Ausgangszelle und des letzte Bit in der Eingangszelle enthalten ist; einem Taktgeber, der Taktimpulse von vorbestimmter Frequenz erzeugt, um die in dem Register gespeicherten Bits von einer Zelle zur darauffolgenden in Richtung zum Ausgang des Registers mit der vorbestimmten Frequenz fortschreiten zu lassen; und Steuermitteln, die auf diesen Anfangszeitpunkt synchronisiert sind, um es zu ermöglichen, ab dem Anfang einer Phase der Auswertung des Anfangswortes am Ausgang des Registers über eine Reihe von relevanten Bits zu verfügen, die wenigstens einige der aufeinanderfolgenden Bits enthalten, die das Anfangswort bilden, wobei der Beginn der Auswertungsphase von dem Anfangszeitpunkt durch ein Zeitintervall getrennt ist, welches dem Erscheinen einer vorbestimmten Zahl von Taktimpulsen entspricht, und wobei das erste der relevanten Bits zum genannten Anfangszeitpunkt in einer vorbestimmten Zelle enthalten ist, dadurch gekennzeichnet, daß das Schieberegister ein dynamisches Register umfaßt, welches in sich rückgeschleift ist über eine Verbindung seines Hauptausgangs mit seinem Eingang, in solcher Weise, daß ein fortwährender Umlauf der darin enthaltenen digitalen Information ermöglicht wird, und daß die Steuermittel einen Hilfsausgang des Registers umfassen, an welchem die Reihe von relevanten Bits verfügbar gemacht wird, wobei dieser Hilfsausgang von der vorbestimmten Zelle durch eine Anzahl von Zellen getrennt ist, die, ab dieser Zelle bis zum Ausgang des Registers gezählt, gleich der vorbestimmten Zahl ist.

**Claim**

A data storage circuit comprising: a shift register comprising a plurality of cells disposed in series between an input and a main output from the register, with each cell containing, at an initial instant, one bit of an initial word whose first bit is contained in the output cell and whose last bit is contained in the input cell; a clock producing clock pulses at a predetermined frequency to cause the bits stored in the register to advance from one cell to the next towards the output of the register at the predetermined frequency; and control means synchronized on said initial instant to make available a series of relevant bits output from the register starting from the beginning of a phase during which the initial word is exploited, said series of relevant bits comprising at least some of the successive bits forming the initial word, the beginning of the exploitation phase being separated from the initial instant by a time interval corresponding to the appearance of a predetermined number of clock pulses, and the first of said relevant bits being contained in a predetermined cell at the said initial instant, the data storage circuit being characterized in that the shift register comprises a dynamic register looped on itself by a connection from its main output to its input, thereby enabling the digital information contained therein to be continuously recirculated, and in that the said control means comprise an auxiliary output from the register at which said series of relevant bits is made available, the auxiliary output being separated from the said predetermined cell by a number of cells which, counting from the said cell towards the output of the register, is equal to the said predetermined number.

EP 0 169 089 B1

FIG. 1

(A)

(B)

(C)

FIG. 2

(A)

(B)

(C)

FIG. 3

(A)

(B)

(C)

FIG. 4

FIG. 5